# EUROPÄISCHE PATENTSCHRIFT

(11) **EP 3 311 901 B1**
(45) Veröffentlichungstag und Bekanntmachung des Hinweises auf die Patenterteilung: **21.04.2021**
(21) Anmeldenummer: 17001658.8
(22) Anmeldetag: 09.10.2017
(51) Int. Cl.: B01D 35/027, B01D 35/06, B01D 36/00, B01D 29/11, B01D 29/54, B01D 39/16

(54) **FILTERELEMENT MIT EINER PERMANENTMAGNETISCHE EIGENSHAFT AUFWEISENDEN FOLIE UND ENTSPRECHENDE FILTERKASSETTE**
FILTER ELEMENT WITH A PERMANENT MAGNETIC FILM AND CORRESPONDING FILTER CASSETTE
ÉLÉMENT FILTRANT AVEC UN FILM MAGNÉTIQUE PERMANENT ET CASSETTE FILTRANTE CORRESPONDANTE

(30) Priorität: 19.10.2016 DE 102016012614; 14.02.2017 DE 102017001716; 14.02.2017 DE 102017001375; 14.02.2017 DE 102017001376
(43) Veröffentlichungstag der Anmeldung: 25.04.2018
(73) Patentinhaber: Hydac Filtertechnik GmbH, 66280 Sulzbach/Saar (DE)
(72) Erfinder: Kleemann, Daniel, 57515 Alsting (DE); Nenno, Alexander, 66646 Marpingen (DE); Lang, Timo, 66540 Neunkirchen (DE)
(74) Vertreter: Bartels und Partner, Patentanwälte

(56) Entgegenhaltungen:
- EP-A1- 2 586 511
- WO-A1-97/22395
- DE-A1-102006 005 551
- DE-A1-102010 035 981
- GB-A- 1 498 375

## Beschreibung

Die Erfindung betrifft ein Filterelement.

Die Betriebssicherheit technischer Anlagen, die Fluidkreisläufe aufweisen, in denen funktionale Fluide, wie Hydraulikmedien, Schmiermittel oder dergleichen, zirkulieren, hängt in hohem Maße von der einwandfreien Beschaffenheit des Fluids ab. Insbesondere, wenn es sich um hochwertige Anlagen handelt, bei denen Betriebsstörungen oder Ausfälle zu hohen wirtschaftlichen Schäden führen, ist es daher Stand der Technik, Einrichtungen zur Pflege der Fluide vorzusehen. Beispielsweise zeigt die DE 10 2007 023 641 B4 eine Filterkassette, die für die Pflege des dem Wandler eines Automatikgetriebes zur Verfügung stehenden Getriebeöls vorgesehen ist. Neben Filtereinrichtungen für die Abreinigung von Verschmutzungen sind bei Anlagen, bei denen es zu einer Belastung des Fluids mit metallischen Partikeln, beispielsweise durch mechanischen Abrieb, kommen kann, häufig auch mit dem Fluid in Kontakt stehende Magneteinrichtungen vorgesehen, um metallische Partikel durch Anhaften abzusondern.

Die DE 10 2010 035 981 A1 beschreibt ein Filterelement für die Filtration von Fluiden, mit einem Filtermaterial, das aus mehreren flächig miteinander verbundenen, mediendurchlässigen Lagen gebildet ist, wobei der Lagenverbund zur Bildung eines plissierten Verlaufs gefaltet ist und wobei außenumfangsseitig eine Folie mit einem aus einem thermoplastischen Kunststoffmaterial bestehenden, permanentmagnetische Eigenschaft aufweisenden Flächenelement vorgesehen ist.

Weitere Filtereinrichtungen gehen aus der GB 1 498 375, der DE 10 2006 005 551 A1, der EP 2 586 511 A1 und der WO 97/22395 A1 hervor.

Ausgehend von diesem Stand der Technik stellt sich die Erfindung die Aufgabe, ein Filterelement mit einer permanentmagnetischen Einrichtung zur Verfügung zu stellen, die besonders einfach und kostengünstig herstellbar sowie bei Fluidsystemen verschiedenster Art mit Vorteil universell verwendbar ist.

Erfindungsgemäß ist diese Aufgabe durch ein Filterelement gelöst, das die Merkmale des Patentanspruchs 1 in seiner Gesamtheit aufweist.

Es ist gemäß Anspruch 1 ein Filterelement für die Filtration von Fluiden mit einem Filtermaterial vorgesehen, das aus mehreren flächig miteinander verbundenen, mediendurchlässigen Lagen gebildet ist, wobei der Lagenverbund zur Bildung eines plissierten Verlaufs gefaltet ist und wobei in den gefalteten Lagenverbund eine Folie mit einem aus einem thermoplastischen Kunststoffmaterial bestehenden, permanentmagnetische Eigenschaft aufweisenden Flächenelement mit eingefaltet ist.

Die Folie ist mit einem aus einem thermoplastischen Kunststoffmaterial bestehenden Flächenelement vorgesehen und weist permanentmagnetische Eigenschaft auf. In der Bauform als Folie lässt sich eine permanentmagnetische Einrichtung nicht nur rationell und kostengünstig herstellen, sondern als flexibles Flächenelement besonders einfach an die unterschiedlichsten Gegebenheiten betreffender Einsatzzwecke bei Fluidkreisläufen unterschiedlichster Art anpassen und in jeweilige Anlagen integrieren, weil die Flexibilität als Folie die Verbindung mit Strukturen oder Substraten unterschiedlichster Geometrie ermöglicht. Die erfindungsgemäße Magnetfolie eignet sich daher für universelle Verwendung.

Bei vorteilhaften Ausführungsbeispielen ist die permanentmagnetische Eigenschaft dadurch erreicht, dass die Folie auf zumindest einer Seite in zumindest einem Teilbereich mit einer permanentmagnetische Eigenschaft aufweisenden Beschichtung versehen ist.

Je nach Verwendungszweck kann die Anordnung mit Vorteil so getroffen sein, dass die permanentmagnetische Beschichtung auf beiden Seiten teilflächig oder vollflächig aufgebracht ist.

Die Folie kann in zumindest einem Flächenbereich mit einer Perforation versehen sein. Als fluiddurchlässige, der Ansammlung von metallischen Partikeln dienende Magneteinrichtung lässt sich die Folie daher in vorteilhafter Weise unmittelbar im Strömungsweg eines betreffenden Fluidkreislaufs anordnen.

Bei besonders vorteilhaften Ausführungsformen ist eine Perforation in Form eines Musters aus von der Kreisform abweichenden, vorzugsweise ovalen Löchern vorgesehen. Wie in dem Dokument WO 2013/050176 A1 für ein Kunststoff-Folienmaterial beschrieben, ist durch ovale oder ellipsenförmige Form von Fluiddurchlassöffnungen ein optimaler Kompromiss aus Strukturfestigkeit und Fluiddurchlässigkeit erreicht. Im Vergleich zu einer Perforation in Form eines Musters aus runden Löchern, wird eine Materialentlastung bei Spannungs- oder Krafteinleitung und damit eine erhöhte Zugfestigkeit erreicht.

Mit besonderem Vorteil kann das die Beschichtung tragende Flächenelement aus einem Polyethylen (PE), Polypropylen (PP) oder Polyamid (PA) bestehen, wobei bevorzugt Polyethylenterephthalat (PET) als Kunststoffmaterial vorgesehen ist.

Für eine besonders effektive Anlagerung metallischer Partikel ist die Anordnung vorteilhafterweise derart getroffen, dass durch die magnetische Beschichtung ein Permanentmagnetfeld mit zu den Breitseiten der Folie quer verlaufender Polarität erzeugt ist. Bei dieser Ausrichtung des Magnetfeldes mit durch die Fläche verlaufenden Kraftlinien ergibt sich eine zusätzliche Feldverstärkung am Rand der die jeweilig Perforation bildenden Löcher.

Offenbart wird auch ein Verfahren zum Herstellen einer permanentmagnetische Eigenschaft aufweisenden Folie, wobei das Verfahren die Schritte aufweist, nämlich:
- Bereitstellen eines Flächenelements aus einem thermoplastischen Kunststoffmaterial;
- Aufbringen einer magnetisierbare Partikel enthaltenden Beschichtung auf zumindest einen Teilbereich mindestens einer Seite des Flächenelements;
- Aushärten der Beschichtung; und
- Magnetisieren durch Einwirkung eines Magnetfeldes.

Danach sieht die Erfindung für ein Flächenelement, das vorzugsweise aus PET besteht, eine Beschichtung vor, die aus einem lackartigen Material, dem magnetisierbare Partikel zugesetzt sind, gebildet wird, wobei dem Beschichtungsmaterial vorzugsweise Partikel aus Boreisenneodym zugesetzt werden. Das Material der Beschichtung kann durch Rakeln, Walzenauftrag oder Digitaldruck aufgebracht werden. Der Walzenauftrag kann in besonders vorteilhafter Weise durch ein Rollenrotationsdruckverfahren (Flexodruck) mit Koronavorbehandlung des Flächenelements durchgeführt werden. Das Aushärten der aufgebrachten Beschichtung kann durch ein Trocknungsverfahren erfolgen. Mit besonderem Vorteil wird jedoch ein Aushärten mittels UV-Licht durchgeführt. Die Magnetisierung zum Erzeugen des Permanentmagnetfeldes mit zu den Breitseiten der Folie quer verlaufender Polarität wird vorteilhafterweise nach Durchführen der übrigen Herstellschritte durchgeführt, beispielsweise indem man die fertige Folie durch das Feld eines Elektromagneten hindurchführt oder hindurchfallen lässt. Gemäß dem Patentanspruch 9 ist Gegenstand der Erfindung auch eine Filterkassette für Getriebeölfiltration, die in den Bodenbereich eines Getriebegehäuses oder einer Ölwanne einsetzbar ist, zumindest ein Filterelement gemäß einem der Ansprüche 1 bis 8 enthält und mit einer permanentmagnetischen Eigenschaft aufweisenden Folie versehen ist, die in einem der Ansprüche 1 bis 8 beschrieben ist.

Die für die Filterkassette so zur Verfügung stehende und metallische Partikel ansammelnde Permanentmagneteinrichtung verringert die Partikelbelastung des jeweiligen Filterelements der Filterkassette und erhöht die Betriebssicherheit bei längeren Betriebslaufzeiten.

Die Anordnung kann mit Vorteil so getroffen sein, dass bei einer Filterkassette mit einer Außenhülle die Folie an dieser innenseitig und/oder außenseitig, in Strömungsrichtung der Filtration gesehen vor der Anströmseite des Filterelements, angeordnet ist.

Bei einer Filterkassette, bei der die Außenhülle die Form einer flachen Schale mit einem bis auf einen fluiddurchlässigen Einströmbereich geschlossenen Schalenboden aufweist, kann dieser durch die erfindungsgemäße Magnetfolie gebildet sein, die mit ihrer Perforation den Einströmbereich bildet. Die erfindungsgemäße Folie bildet dadurch nicht nur ein großflächiges Wandelement der Hülle, sondern stellt in dieser Form für das Getriebeöl auch eine große Kontaktfläche zur Verfügung, so dass eine effektive Partikelabscheidung gewährleistet ist.

Mit durchgehender Perforation kann die Folie auch Bestandteil des Filtermaterials des jeweiligen Filterelements der Filterkassette bilden, beispielsweise indem es bei einem mehrlagigen Filtermaterial eine Zusatzlage bildet.

Bei einer Ausführungsform, ist der Lagenverbund zur Bildung eines plissierten Verlaufs sterngefaltet. Filterelemente mit mehrlagigem, sterngefaltetem Filtermaterial sind Stand der Technik, vergleiche beispielsweise DE 10 2011 122 348 A1. Die Folie kann mit Vorteil bei einem derartigen Filterelement beispielsweise als anströmseitig gelegene Stützlage mit eingefaltet sein.

Nachstehend ist die Erfindung anhand der Zeichnung im Einzelnen erläutert. Es zeigen:
- Fig. 1: eine stark vergrößert, abgebrochen und angeschnitten gezeichnete perspektivische Schrägansicht eines Flächenabschnitts der Magnetfolie;
- Fig. 2: eine perspektivische Schrägansicht einer Filterkassette für Getriebeölfiltration;
- Fig. 3: einen schematisch vereinfacht gezeichneten Vertikalschnitt der Filterkassette mit zentral verlaufender Schnittebene;
- Fig. 4: eine in perspektivischer Schrägansicht gezeichnete Unteransicht der Schale der Außenhülle der Filterkassette, wobei der Schalenboden weggelassen ist;
- Fig. 5: eine Unteransicht der Filterkassette; und
- Fig. 6: eine in Richtung der Langseiten aufgeschnittene perspektivische Schrägansicht der Filterkassette, gesehen auf die Unterseite und ohne Entgasungseinrichtung.

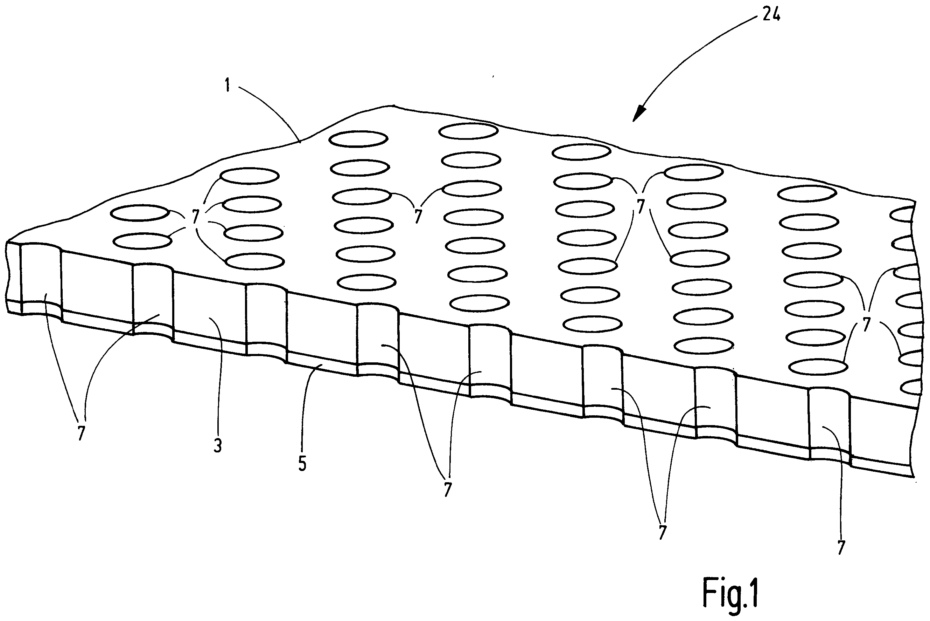

Die Fig. 1 zeigt einen Teilflächenbereich eines Ausführungsbeispiels der erfindungsgemäßen Magnetfolie 1 mit einem eine flache Folienbahn bildenden Flächenelement 3, das aus einem für Kunststofffolien geeigneten und üblichen Material besteht. Beim vorliegenden Beispiel ist hierfür Polyethylenterephthalat (PET) vorgesehen. Das Flächenelement 3 besitzt beim gezeigten Beispiel eine Dicke von 0,2 mm. Je nach Einsatzbedingungen kommen weit geringere Folienstärken oder auch größere Dicken von 1 mm oder mehr in Betracht. Vor der Weiterbehandlung wird das Material des Flächenelements 3 vorzugsweise zur Erhöhung der Strukturfestigkeit biaxial gereckt. Bei dem in Fig. 1 gezeigten Ausführungsbeispiel ist die Folie 1 vollflächig fluiddurchlässig ausgebildet und hierfür mit einer Perforation 24 versehen. Diese ist durch ein Lochmuster aus ellipsenförmigen Löchern 7 gebildet, die in Fig. 1 nur teilweise beziffert sind und in zueinander parallelen Reihen angeordnet sind. Die Löcher 7 können im Flächenelement 3 auf verschiedene Art und Weise gebildet sein, beispielsweise durch Lochstanzen oder Lasern. Je nach Einsatzzweck kann das Flächenelement 3 nur in ausgewählten Flächenbereichen mit der Perforation 24 versehen sein, um für das Durchströmen der Folie 1 durch ein Fluid definierte Durchlassbereiche zu bilden. Wenn eine flächige Anströmung oder Kontaktierung der Folie 1 mit Fluid vorgesehen ist, kann die Perforation 24 des Flächenelements 3 weggelassen sein.

Zur Bildung der permanentmagnetischen Eigenschaft der Folie 1 weist diese auf zumindest einer Seite, beim in Fig. 1 gezeigten Beispiel auf der untenliegenden Seite, eine Beschichtung 5 des Flächenelements 3 auf. Diese ist in einer Schichtdicke, die zwischen 1 *µ*m und mehr als 200 *µ*m betragen kann, aus einem lackartigen Material, wie einer Siebdruckfarbe oder dergleichen gebildet und mittels eines Auftragsverfahrens, wie Rakeln, Walzenauftrag oder Digitaldruck, aufgebracht. Der Walzenauftrag kann in Form eines Rollenrotationsdruckverfahrens (Flexodruck) durchgeführt werden, wobei eine Koronavorbehandlung des Flächenelements 3 vorgesehen ist. Die Beschichtung 5 kann auf beiden Seiten des Flächenelements 3 vollflächig aufgebracht sein. Vor dem Auftragen werden dem Beschichtungsmaterial magnetisierbare Partikel zugesetzt. Mit Vorteil sind Partikel aus Boreisenneodym vorgesehen, mit denen eine hohe magnetische Feldstärke erreichbar ist. Nach dem Auftrag wird die Beschichtung mittels eines Trocknungsverfahrens ausgehärtet. Mit geringem Zeitaufwand kann dies auf rationelle Weise mittels UV-Licht erfolgen. Die Magnetisierung als abschließender Schritt des Herstellverfahrens erfolgt nach dem Aushärten der Beschichtung 5 mittels Einwirkung eines äußeren Magnetfeldes. Hierfür wird das insoweit fertiggestellte Folienerzeugnis durch das Feld einer Elektromagneteinrichtung hindurchgeführt, beispielsweise indem man die Folie 1 durch das Feld hindurchfallen lässt. Die Folie 1 ist dabei relativ zum Elektromagnetfeld so orientiert, dass die Magnetpartikel der Beschichtung 5 mit zu den Breitseiten der Folie 1 senkrechter Polarität magnetisiert werden. Dieser Kraftlinienverlauf führt an den Rändern der Löcher 7 zu einer Feldverdichtung und zu hoher Magnetkraftwirkung der Folie 1.

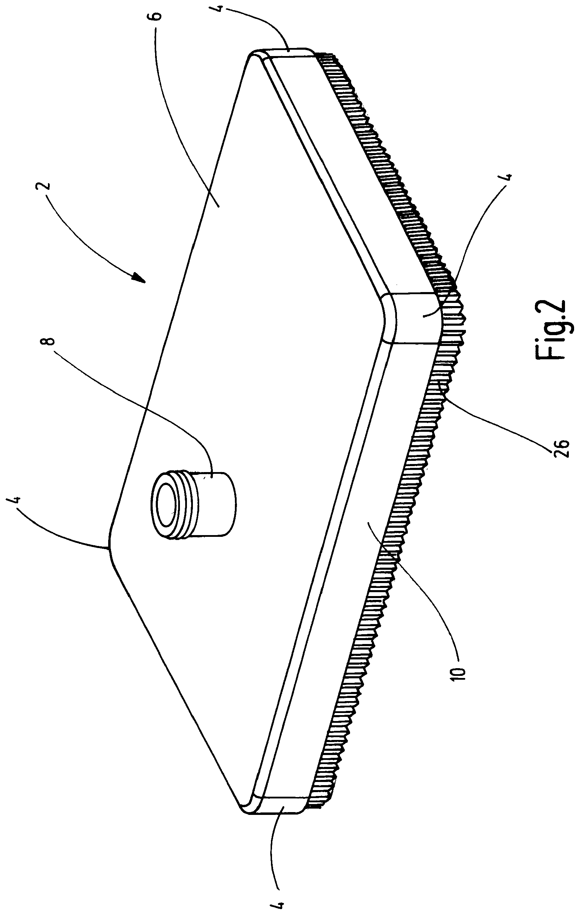

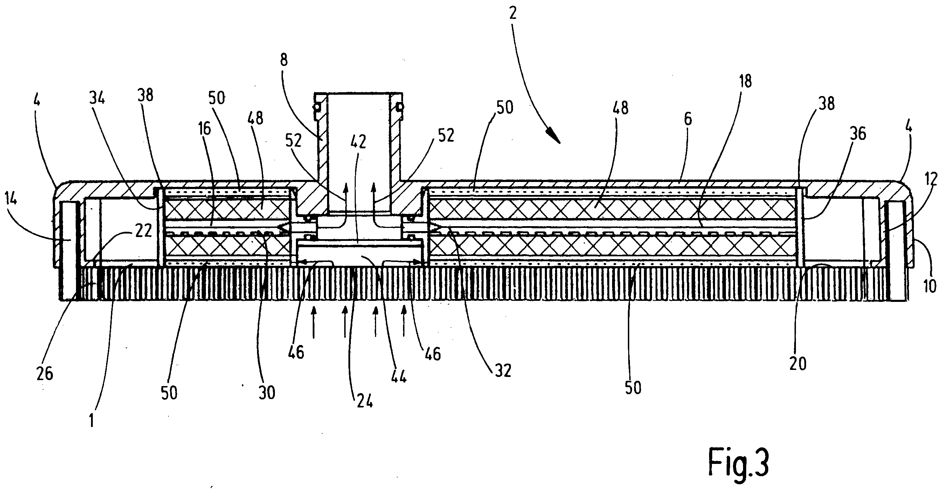

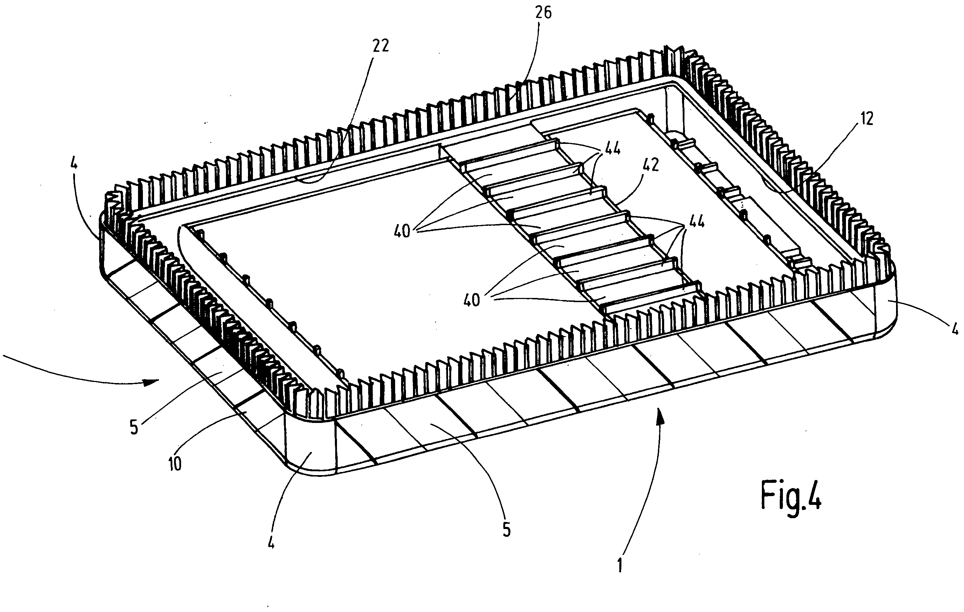

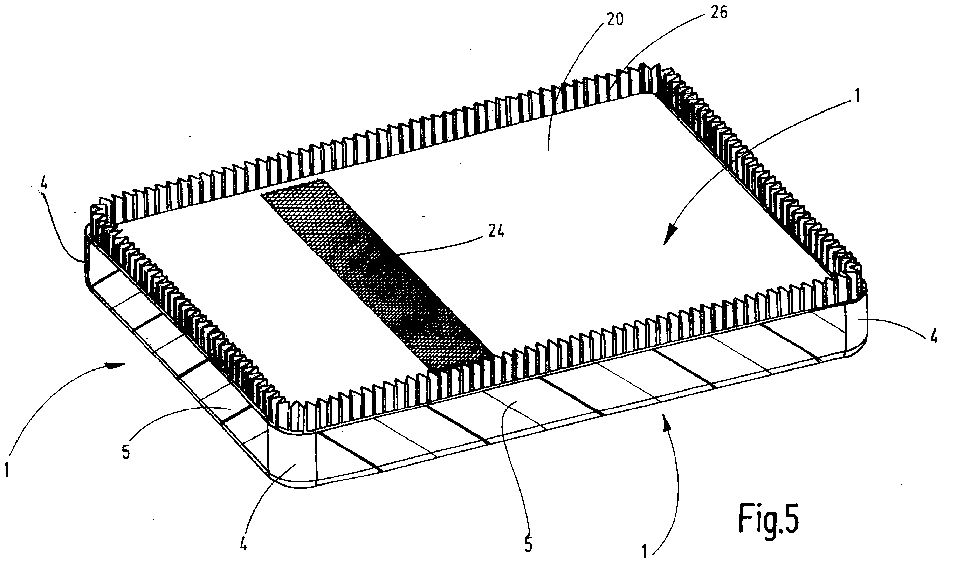

Die Fig. 2 bis 6 zeigen ein Beispiel der Verwendung der erfindungsgemäßen Magnetfolie 1 als Permanentmagneteinrichtung, die bei einer Filterkassette für Getriebeölfiltration zur Abscheidung metallischer Partikel aus dem Getriebeöl dient, das dem Wandler eines (nicht gezeigten) Automatikgetriebes zur Verfügung gestellt ist. Die in der Zeichnung dargestellte Filterkassette weist eine Außenhülle 2 auf, die aus einem Kunststoffmaterial spritzgegossen ist und (s. Fig. 2) die Form eines flachen Rechteckquaders mit abgerundeten Eckbereichen 4 aufweist. An der ebenflächigen Oberseite 6 befindet sich mittig zwischen den Langseiten, jedoch einer der Schmalseiten näher gelegen als der anderen Schmalseite, ein Sauganschlussstutzen 8. Zwischen den Eckbereichen 4 verläuft umfänglich durchgehend ein Außenrand 10, der, wie die Oberseite 6, ebenflächig ist und bei dem gezeigten Ausführungsbeispiel eine vertikale Höhe besitzt, die etwa einem Zehntel der Länge der Langseiten entspricht. Wie am deutlichsten aus den Fig.3 und 4 zu ersehen ist, ist durch einen inneren Umfangsrand 12, der sich in einem Abstand innerhalb des Außenrandes 10 und zu diesem parallel verlaufend erstreckt, in der Hülle 2 eine innere Schale gebildet, die an der Unterseite offen ist und in der, s. Fig. 3, zwei Filterelemente 16 und 18 aufgenommen sind, die für den Betrieb als Saugfiltereinrichtung vorgesehen sind. Die Fig. 4 zeigt den Blick von unten in die geöffnete Schale ohne darin eingebaute Filterelemente 16, 18, während die Fig. 5 die durch einen Schalenboden 20 geschlossene Schale zeigt. Dieser Schalenboden 20 ist durch die erfindungsgemäße Folie 1 gebildet, die mit einer umfänglichen Randleiste 22 des inneren Umfangsrandes 12 verschweißt ist. Für die Bildung des Schalenbodens 20 weist die Folie 1 lediglich in einem Teilbereich die Perforation 24 auf. Genauer gesagt, erstreckt sich die Perforation 24 in einem parallele Seitenränder aufweisenden Streifen, der, wie Fig. 3 zeigt, parallel zu den Schmalseiten der Schale verläuft, in einer Position, die auf den Anschlussstutzen 8 ausgerichtet ist und die für den Filtrationsbetrieb einen Einströmbereich der Filterkassette bildet.

In dem zwischen Außenrand 10 und Umfangsrand 12 gebildeten Zwischenraum 14 ist eine Entgasungseinrichtung angeordnet, die einen umfänglich verlaufenden Kranz 26 bildet, der über die Unterseite des Schalenbodens 20 vorsteht und bei Einbau der Filterkassette auf dem Bodenbereich des zugehörigen Getriebegehäuses (nicht gezeigt) aufsteht und in den Ölsumpf eintaucht. Von den Filterelementen 16 und 18 ist das Filterelement 16 ein Grobfilter und das Filterelement 18 ein Feinfilter. Für eine günstige Volumenstromaufteilung bei einem Saugfilterbetrieb im parallelen Nebenstrom beträgt die axiale Länge des Filterelements 18 etwa das 2,8-fache des Filterelements 16. Die Filterelemente 16, 18 weisen als Filtermaterial eine mehrlagige Filtermatte auf, die einen inneren Filterhohlraum 30 bzw. 32 umgibt und zwischen Endkappen 34 und 36 verläuft, die an Absätzen 38, die, s. Fig. 3, an der Innenseite der Oberseite gebildet sind, mit der Hülle 2 verschweißt sind. Mit vollflächig ausgebildeter Perforation kann die erfindungsgemäße Folie 1 als zusätzliche Lage in den plissierten Lagenverbund des mehrlagigen Filtermaterials 48 der Filterelemente 16, 18 mit eingefaltet sein, wobei die Magnetfolie 1 an der Anströmseite des Materials 48 angeordnet ist und eine zusätzliche Permanentmagneteinrichtung innerhalb der Filterkassette bildet.

Für den Saugfilterbetrieb ist der Anschlussstutzen 8 mit einer Saugölpumpe des Getriebes verbunden. Für die Durchströmung der Filterelemente 16, 18 tritt das Öl über den Perforationsbereich 24 der den Schalenboden 20 bildenden Folie 1 in Anströmräume 40 (Fig. 4) ein, die zwischen einer Trennwand 42 und Leisten 44 gebildet sind, an welch letzteren die Folie 1 des Schalenbodens 20 anliegt. Aus den Räumen 40 gelangt das Öl, wie mit Pfeilen 46 (Fig. 3) angedeutet ist, zur Außenseite der Filterelemente 16 und 18. Zur Bildung der Strömungswege zur Zuströmung zur Außenseite der Filterelemente 16, 18 befindet sich zwischen der Außenseite des Filtermaterials 48 und der benachbarten Wand von Außenhülle 2 und der den Schalenboden 20 bildenden Folie 1 jeweils ein Freiraum oder eine flache Drainagelage 50 in Form eines fluiddurchlässigen Schaummaterials. Nach Durchströmen des Filtermaterials 48 von außen nach innen strömt das Fil-trat aus dem inneren Filterhohlraum 30 bzw. 32 des Grobfilterelements 16 bzw. Feinfilterelement 18, wie in Fig. 3 mit Abströmpfeilen 52 angedeutet, aus dem Anschlussstutzen 8 ab.

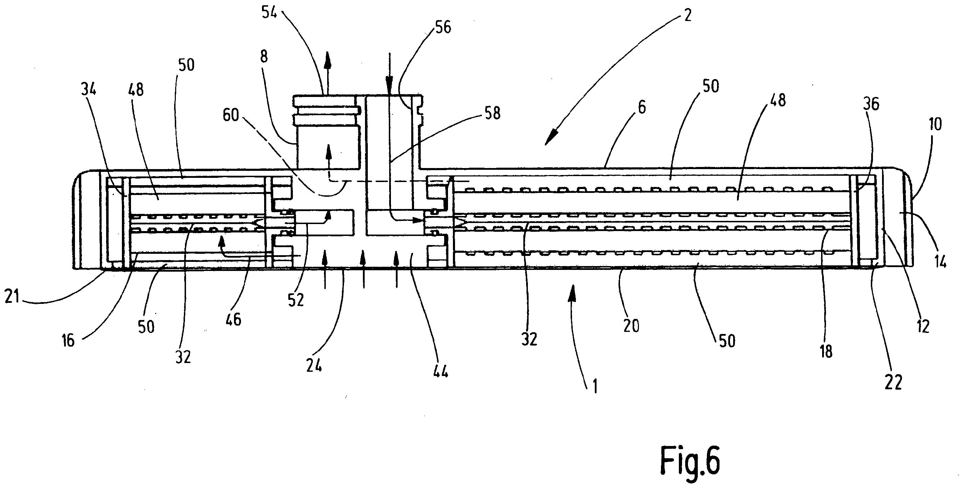

Bei der Anordnung der Magnetfolie 1 als Schalenboden 20, der, wie in Fig. 6 gezeigt, mit der Randleiste 22 an der in Fig. 6 mit 21 bezeichneten Schweißstelle verschweißt ist und mit der Perforation 24 den Einströmbereich für das Getriebeöl bildet, ist dieses in vollflächigem Kontakt mit der Folie 1. Bei beidseitig an dieser angebrachter Beschichtung 5 ist daher eine effektive Absonderung von Metallpartikeln erreicht, bevor das Getriebeöl zu den Filterelementen 16, 18 gelangt. Während bei üblichen Filterelementen, die ein mehrlagiges Filtermaterial aufweisen, das vorzugsweise plissiert ist und einen inneren Filterhohlraum umgibt, das Filtermaterial kreiszylindrisch ist, ist bei den vorliegenden Filterelementen 16, 18 das Filtermaterial 48 sozusagen flachgedrückt, d.h. der innere Filterhohlraum 30 und 32, ebenso wie die Außenseite des Filtermaterials 48, haben die Form eines sehr flachen Ovals, wobei sich die Außenseite des Filtermaterials 48 im Wesentlichen über die gesamte Breite der Schmalseite der Filterkassette erstreckt. Bei großer zur Verfügung stehender Filterfläche ist daher eine flache Bauweise der Außenhülle 2 realisierbar. Bei Anordnung von Drainagelagen 50 an der Außenseite des Filtermaterials 48 eröffnet sich die Möglichkeit, die Außenhülle 2 anstatt aus festem Kunststoffmaterial aus einer flexiblen Folie, etwa ein Polyamid, wie PA6, auszubilden. Da die Drainagelagen 50 die erforderlichen Fluidwege zur Verfügung stellen, können sich Außenhülle 2 und Schalenboden 20 unmittelbar an die Innenkontur anschmiegen, so dass für die Filterkassette eine besonders geringe Bauhöhe realisierbar ist.

In gegenüber Fig. 3 schematisch weiter vereinfachter Darstellung zeigt die Fig. 6 ein zweites Ausführungsbeispiel der Filterkassette, bei dem nur das den Grobfilter bildende Filterelement 16 als Saugfilter und das den Feinfilter bildende Filterelement 18 als Rücklauffilter betreibbar ist. Bei diesem Ausführungsbeispiel weist der Anschlussstutzen 8 zwei voneinander getrennte Fluidwege auf, von denen einer einen Saugpumpenanschluss 54 und der andere einen Rücklaufanschluss 56 bildet. Über den Perforationsbereich 24 der den Schalenboden 20 bildenden Folie 1 ist das Filterelement 16 als Grobfilter zum Pumpenanschluss 54 hin durchströmt. Das den Feinfilter bildende Filterelement 18 ist über den Rücklaufanschluss 56 als Rücklauffilter betrieben, wobei, wie in Fig. 6 mit Einströmpfeil 58 gezeigt, das Unfiltrat zum inneren Filterhohlraum 32 zuströmt. Das an der Außenseite des Filterelements 18 austretende Filtrat gelangt, wie auch das Filtrat des Grobfilters, unmittelbar zum Pumpenanschluss 54, s. Pfeil 60 von Fig. 6.

Alternativ oder zusätzlich zu der Anordnung der Magnetfolie 1 als zum Innenraum der Filterkassette zugehöriges Element, wie dem Schalenboden 20, kann die Folie 1 an der Außenhülle 2 außenseitig angebracht sein, wie dies in Fig. 4 und 5 gezeigt ist, wo die Folie 1 in Form eines Bandes mit außenliegender Beschichtung 5 am Außenrand 10 entlang der Langseiten und der Schmalseiten der Hülle 2 angebracht ist. Als an der Außenseite von betreffenden Gehäusen angebrachtes Element könnte eine Folie 1 an ihrer sichtbaren Beschichtung 5 auch mit einem dekorativen Muster oder einer Markierung, wie einer Beschriftung, versehen sein. Wie bereits erwähnt, kann die erfindungsgemäße Folie Bestandteil eines Filterelements für beliebigen Einsatz in unterschiedlichen Fluidkreisläufen bilden, beispielsweise bei Filterelementen der in DE 10 2011 122 348 A1 gezeigten Gattung, die ein Filtermaterial in Form eines Verbundes aus mehreren, sterngefalteten, plissierten Lagen aufweisen, wobei die erfindungsgemäße Folie 1 als Permanentmagneteinrichtung an der Anströmseite in den Lagenverbund als zusätzliche Lage mit eingefaltet sein kann.

## Patentansprüche

1. Filterelement für die Filtration von Fluiden, mit einem Filtermaterial (48), das aus mehreren flächig miteinander verbundenen, mediendurchlässigen Lagen gebildet ist, wobei der Lagenverbund zur Bildung eines plissierten Verlaufs gefaltet ist und wobei in den gefalteten Lagenverbund eine Folie (1) mit einem aus einem thermoplastischen Kunststoffmaterial bestehenden, permanentmagnetische Eigenschaft aufweisenden Flächenelement (3) mit eingefaltet ist.

2. Filterelement nach Anspruch 1, **dadurch gekennzeichnet, dass** die Folie (1) auf zumindest einer Seite in zumindest einem Teilbereich mit einer permanentmagnetische Eigenschaft aufweisenden Beschichtung (5) versehen ist.

3. Filterelement nach Anspruch 1 oder 2, **dadurch gekennzeichnet, dass** die Folie (1) auf beiden Seiten mit einer magnetischen Beschichtung (5) versehen ist.

4. Filterelement nach einem der vorstehenden Ansprüche, **dadurch gekennzeichnet, dass** die Folie (1) in zumindest einem Flächenbereich mit einer Perforation (7, 24) versehen ist.

5. Filterelement nach einem der vorstehenden Ansprüche, **dadurch gekennzeichnet, dass** eine Perforation (7, 24) in Form eines Musters aus von der Kreisform abweichenden, vorzugsweise ovalen Löchern (7) vorgesehen ist.

6. Filterelement nach einem der vorstehenden Ansprüche, **dadurch gekennzeichnet, dass** das die Beschichtung (5) tragende Flächenelement (3) aus einem Polyethylen (PE), Polypropylen (PP) oder Polyamid (PA) besteht.

7. Filterelement nach einem der vorstehenden Ansprüche, **dadurch gekennzeichnet, dass** als Kunststoffmaterial Polyethylenterephthalat (PET) vorgesehen ist.

8. Filterelement nach einem der vorstehenden Ansprüche, **dadurch gekennzeichnet, dass** durch die magnetische Beschichtung (5) ein Permanentmagnetfeld mit zu den Breitseiten quer verlaufender Polarität erzeugt ist.

9. Filterkassette für Getriebeölfiltration, die in den Bodenbereich eines Getriebegehäuses einsetzbar ist, zumindest ein Filterelement (16, 18) gemäß einem der Ansprüche 1 bis 8 enthält und mit einer permanentmagnetische Eigenschaft aufweisenden Folie (1) versehen ist, die in einem der Ansprüche 1 bis 8 beschrieben ist.

10. Filterkassette nach Anspruch 9, **dadurch gekennzeichnet, dass** sie eine Außenhülle (2) aufweist und dass die Folie (1) an dieser innenseitig und/oder außenseitig, in Strömungsrichtung der Filtration gesehen, vor der Anströmseite des jeweiligen Filterelements (16, 18) angeordnet ist.

11. Filterkassette nach Anspruch 9 oder 10, **dadurch gekennzeichnet, dass** die Außenhülle (2) die Form einer flachen Schale mit einem bis auf einen fluiddurchlässigen Einströmbereich (24) geschlossenen Schalenboden (20) aufweist, der durch die in einem der Ansprüche 1 bis 8 beschriebene Folie (1) geschlossen ist, die mit ihrer Perforation (7, 24) den Einströmbereich (24) bildet.

12. Filterkassette nach einem der Ansprüche 9 bis 11, **dadurch gekennzeichnet, dass** die Folie (1) mit durchgehender Perforation (7, 24) Bestandteil des Filtermaterials (48) des jeweiligen Filterelements (16, 18) bildet.

13. Filterelement nach einem der Ansprüche 1 bis 8, **dadurch gekennzeichnet, dass** der Lagenverbund zur Bildung eines plissierten Verlaufs sterngefaltet ist.

14. Filterelement nach einem der Ansprüche 1 bis 8 und 13, **dadurch gekennzeichnet, dass** die durchgehend perforierte Folie (1) an der Anströmseite des Lagenverbundes des Filtermaterials (48) angeordnet ist.

## Claims

1. Filter element for filtering fluids, comprising a filter material (48) which is formed from a plurality of media-permeable flat layers connected to one another, the composite layers being folded to create a pleated shape and a film (1) comprising a surface element (3) consisting of a thermoplastics material with permanent magnetic properties being folded in with the folded composite layers.

2. Filter element according to claim 1, **characterised in that** the film (1) is furnished with a coating (5) with permanent magnetic properties in at least one partial region on at least one side.

3. Filter element according to claim 1 or 2, **characterised in that** the film (1) is furnished with a magnetic coating (5) on both sides.

4. Filter element according to any one of the preceding claims, **characterised in that** the film (1) is furnished with a perforation (7, 24) in at least one surface region.

5. Filter element according to any one of the preceding claims, **characterised in that** a perforation (7, 24) is provided with holes (7) which are not circular, preferably oval, in the form of a pattern.

6. Filter element according to any one of the preceding claims, **characterised in that** the surface element (3) bearing the coating (5) is made from a polyethylene (PE), polypropylene (PP) or polyamide (PA).

7. Filter element according to any one of the preceding claims, **characterised in that** polyethylene terephthalate (PET) is provided as the plastics material.

8. Filter element according to any one of the preceding claims, **characterised in that** a permanent magnetic field with polarity running transversely to the broad sides is generated by the magnetic coating (5).

9. Filter cassette for filtering gear oil which can be used in the lower region of a gearbox housing, contains at least one filter element (16, 18) according to any one of claims 1 to 8 and is furnished with a film (1) with permanent magnetic properties, as described in any one of claims 1 to 8.

10. Filter cassette according to claim 9, **characterised in that** it comprises an outer sleeve (2) and **in that** the film (1) is arranged on the inner and/or outer side thereof, when viewed in the filtration flow direction, before the incoming flow side of the respective filter element (16, 18).

11. Filter cassette according to claim 9 or 10, **characterised in that** the outer sleeve (2) takes the form of a flat tray, the base (20) of said tray being closed apart from a fluid-permeable inlet flow region (24), said base being closed by the film (1) as described in any one of claims 1 to 8, said film, along with its perforation (7, 24), forming the inlet flow region (24).

12. Filter cassette according to any one of claims 9 to 11, **characterised in that** the film (1) with through perforation (7, 24) forms part of the filter material (48) of the respective filter element (16, 18).

13. Filter element according to any one of claims 1 to 8, **characterised in that** the composite layers are folded in a star shape to create a pleated shape.

14. Filter element according to any one of claims 1 to 8 and 13, **characterised in that** the through-perforated film (1) is arranged on the incoming flow side of the composite layers of the filter material (48).

## Revendications

1. Elément de filtre pour la filtration de fluides, comprenant une matière (48) filtrante, qui est formée de plusieurs couches perméables au fluide et reliées entre elles en nappe, dans lequel le composite de couches est plié pour la formation d'un tracé plissé et dans lequel, dans le composite de couches plié, est incorporée par pliage une feuille (1) ayant un élément (3) de surface, constitué d'une matière plastique thermoplastique et ayant une propriété de magnétisme permanent.

2. Elément de filtre suivant la revendication 1, **caractérisé en ce que** la feuille (1) est pourvue, au moins sur une face, au moins dans une région partielle, d'un revêtement (5) ayant une propriété de magnétisme permanent.

3. Elément de filtre suivant la revendication 1 ou 2, **caractérisé en ce que** la feuille (1) est pourvue, sur les deux faces, d'un revêtement (5) magnétique.

4. Elément de filtre suivant l'une des revendications précédentes, **caractérisé en ce que** la feuille (1) est pourvue, dans au moins une région de surface, d'une perforation (7, 24).

5. Elément de filtre suivant l'une des revendications précédentes, **caractérisé en ce qu'**une perforation (7, 24) est prévue sous la forme d'un motif de trous s'écartant de la forme circulaire, de préférence ovale.

6. Elément de filtre suivant l'une des revendications précédentes, **caractérisé en ce que** l'élément (3) de surface portant le revêtement (5) est en un polyéthylène (PE), en un polypropylène (PP) ou en un polyamide (PA).

7. Elément de filtre suivant l'une des revendications précédentes, **caractérisé en ce que** du poly(téréphtalate d'éthylène) (PET) est prévu comme matière plastique.

8. Elément de filtre suivant l'une des revendications précédentes, **caractérisé en ce que**, par le revêtement (5) magnétique, il est produit un champ magnétique permanent ayant une polarité s'étendant transversalement au grand côté.

9. Cassette de filtre pour la filtration d'huile d'engrenage, qui peut être insérée dans la région de fond d'un carter d'engrenage, contient au moins un élément (16, 18) de filtre suivant l'une des revendications 1 à 8 et est pourvue d'une feuille (1) ayant une propriété de magnétisme permanent, qui est décrite dans l'une des revendications 1 à 8.

10. Cassette de filtre suivant la revendication 9, **caractérisée** ce qu'elle a une enveloppe (2) extérieure et en ce que la feuille (1) est montée sur celle-ci, du côté intérieur et/ou du côté extérieur considéré dans la direction d'écoulement de la filtration, avant le côté d'afflux de l'élément (16, 18) de filtre respectif.

11. Cassette de filtre suivant la revendication 9 ou 10, **caractérisée** ce que l'enveloppe (2) extérieure a la forme d'une coquille plane ayant un fond (20) de coquille fermé, à l'exception d'une région (24) d'entrée perméable au fluide, fond qui est fermé par une feuille (1) décrite à l'une des revendications 1 à 8, qui forme, par sa perforation (7, 24) la région (24) d'entrée.

12. Cassette de filtre suivant l'une des revendications 9 à 11, **caractérisée** ce que la feuille (1) forme, par une perforation (7, 24) traversante, une partie constitutive de la matière (48) filtrante de l'élément (16, 18) de filtre respectif.

13. Elément de filtre suivant l'une des revendications 1 à 8, **caractérisé en ce que** le composite de couches est plié en étoile pour la formation d'un tracé plissé.

14. Elément de filtre suivant l'une des revendications 1 à 8 et 13, **caractérisé en ce que** la feuille (1) perforée de manière traversante est disposée du côté d'afflux du composite de couches de la matière (48) filtrante.
